# EUROPEAN PATENT APPLICATION

(11) **EP 1 615 395 A1**
(43) Date of publication of application: **11.01.2006**
(21) Application number: 05014838.6
(22) Date of filing: 08.07.2005
(51) Int. Cl.: H04L 12/56, H04Q 7/38

(54) **Contention-free access point controlled sequential access in WLAN 802.11e**

(30) Priority: 10.07.2004 US 888398
(71) Applicant: MITSUBISHI DENKI KABUSHIKI KAISHA, Chiyoda-ku Tokyo 100-8310 (JP)
(72) Inventor: Yuan, Yuan, Greenbelt City MD 20770 (US); Gu, Daqing, Burlington MA 01803 (US); Zhang, Jinyun, Cambridge MA 02141 (US)
(74) Representative: Pfenning, Meinig & Partner GbR

(57) **Abstract**

A method provides access to a channel in a network including stations and an access point connected by a common wireless channel. A station makes a request to the access point to access to the channel to transmit a data stream. The access point assigns a sequence index value to the data stream. The sequence index value is broadcast by the access point. Then, the station transmits the data stream, during a contention free period, at a time corresponding to the sequence index value.

## Description

### BACKGROUND OF THE INVENTION

### 1. Field of the Invention

This invention relates generally to wireless networks, and more particularly access control in wireless networks.

### 2. Description of the Related Art

In a wireless local area network (WLAN) according to the IEEE 802.11 standard, an access point (AP) in a cell coordinates packet transmission for all the stations associated with the cell. A single wireless channel, i.e., frequency band, is shared by both the uplink from the station to the AP, and the downlink from the AP to the station for data and control signals. Every station can communicate with the AP, whereas it is not required for any two stations to be within communication range of each other.

The transmission rate of the wireless channel can vary, depending on a perceived signal-to-noise ratio (SNR). For example, the physical layer of the IEEE 802.11b standard supports four rates at 1Mbps, 2Mhps, 5.5Mbps and 11Mbps.

### IEEE 802.11e HCCA

To support a given quality of service (QoS), the IEEE 802.11e standard defines two operating modes: enhanced distributed channel access (EDCA), and hybrid coordinated channel access (HCCA). The EDCA mode is based upon carrier sensing multiple access with collision avoidance (CSMA/CA). CSMA/CA provides prioritized channel access for up to four access categories (ACs). Each AC is associated with a set of QoS parameters for channel contention, such as backoff values, to realize different services among the ACs.

The HCCA mode allows a hybrid coordinator (HC) located at the AP to poll stations for contention-free access during a contention-free period (CFP), and allocates a transmission opportunity (TXOP) at any time during a contention period (CP). HCCA enables parameterized QoS for each data stream. The HC allocates a transmission opportunity (TXOP) in both the CFP and the CP. Each TXOP specifies a start time and a duration of a transmission for a particular station. The traffic profile and QoS requirements of each data stream can be taken into consideration, when centralized scheduling is applied for TXOP allocation.

To regulate uplink transmission, the HC sends CF-Poll messages to each station in order to collect current traffic information, such as data arrival rate, and data size. The standard specifies a simple round-robin scheduling algorithm to poll each station during predefined service intervals according to a QoS contract.

### Dynamic TDMA Based Scheme

Dynamic time division multiple access (TDMA) offers an alternative technique to provide parameterized QoS. The entire charmel is divided into time slots, and multiple time slots form a superframe. The time slot allocation is performed by the AP, which takes into account the QoS requirements of each data stream. After the slots are allocated, all transmissions begin at the predefined time and last for predefined maximum durations at a granularity of a time slot.

The slot allocation is also adjusted regularly in order to accommodate short-term rate variations of applications. In addition, the AP can use several acknowledgement (ACK) policies, e.g., immediate ACK, delayed ACK, repetition, etc., to acknowledge reception of each packet. These ACK policies accommodate diverse applications and traffic types, e.g., unicast, multicast and broadcast transmissions. Furthermore, access slots, which are typically much smaller than data slots, are used by joining stations to send the AP requests such as association/authentication, resource reservations, etc. These access slots are typically contended via CSMA/CA or slotted Aloha.

The MAC design in the HiperLAN/2 (H/2) and the IEEE 802.15.3 standards adopts this dynamic TDMA based scheme to coordinate QoS-oriented channel access among contending stations.

### Limitations of Prior Art

Both the polling-based method and the dynamic TDMA-based method have drawbacks with respect to providing QoS in wireless LANs.

The polling-based channel access method grants applications with QoS in a relatively flexible way. That method can handle variable packet size, and can accommodate short-term rate :variations. However, this flexibility is achieved at the cost of high signaling overhead. The polling procedure incurs non-negligible channel inefficiency because every uplink data packet involves a polling message exchange with HC. Moreover, the polling messages are transmitted at the base rate, e.g., 1Mbps according to the 802.11b standard, to accommodate different transmission rates of various stations. This further deteriorates the throughput.

The dynamic TDMA-based method can efficiently provide QoS support for constant-bit-rate (CBR) multimedia applications, but not for variable-bit-rate (VBR) applications. Typically, the VBR applications, such as video-conferencing, have variable packet sizes, or time-varying source rates. Moreover, the TDMA-based method requires strict, fine-grained time synchronization at a 'mini-slot' level.

Another method uses a "central coordination and distributed access," Lo et al. "An Efficient Multipolling Mechanism for IEEE 802.11 Wireless LANs," IEEE Transactions on Computers, Vol. 52, No. 6, June 2003. However, that method has several limitations. First, that method does not have a mechanism to accommodate the multi-rate physical-layer capability specified by the current IEEE 802.11 standard. Therefore, potential throughput gain is greatly compromised. Second, that method does not have a mechanism to accommodate short-term traffic variations while ensuring long-term bandwidth for each data scream according to its QoS contract. Third, that method does not have any policing mechanism to detect and penalize aggressive or misbehaving data streams that violate their QoS specifications.

None of the prior art methods simultaneously provide flexible QoS support and achieve high channel efficiency. Therefore, a new channel access method for CFP is needed for wireless LANs to achieve the above goals. The method should handle variable traffic patterns exhibited by diverse multimedia applications, and improve channel utilization for data transfer.

### SUMMARY OF THE INVENTION

The invention provides a sequentially coordinated channel access (SCCA) method that operates during the contention free period (CFP) of the IEEE 802.11 media access control (MAC) protocol.

The SCCA method has the flexibility and simplicity of a regular polling scheme, while significantly reducing overhead and improving overall throughput by eliminating polling messages.

The SCCA method achieves the efficiency of the dynamic TDMA-based mechanism, but avoids the strict slot time synchronization and fixed channel transmission time allocation for each station between two allocation periods. Moreover, the SCCA method utilizes a policing mechanism to maintain QoS fairness and incorporates the concept of rate threshold to fully exploit the multiple-rate capability at the physical layer.

In the SCCA method, an access point (AP) provides central coordination, while each station accesses the channel in a distributed manner Given a long-term QoS contract with a station, in terms of bandwidth and delay, the SCCA method uses a sequence index value (SIV), a dynamic transmission duration period (TXDT), and an access credit/debit count to coordinate an access order and a transmission time duration for data streams using a common channel.

After a station receives the assigned SIV and TXDT, the station 'backs-off' for a time corresponding to the SIV. The data stream with a smallest SIV will succeed in channel contention and can access the channel up to a time period specified by the TXDT.

The AP can monitor statistics of actual consumption of bandwidth resources and record the transmission time used by each data stream. Based upon the statistics, the AP can use the access credit/debit counters to police aggressive data streams and compensate under-served flows. Thus, the SCCA method accommodates short-term variation in channel access time, while guaranteeing each data stream a long-term bandwidth allocation according to the QoS requirement and traffic profile.

To exploit the multirate capability available at the current physical layer, the rate used to transmit the SIV and TXDT can be adjusted adaptively to further improve channel efficiency.

Performance analysis shows that the SCCA method can achieve an overall channel efficiency of 83.3%, given the physical-layer transmission rate at 216 Mbps.

Because the basic mechanism of the SCCA method requires only the distribution of the SIV and TXDT, which can be embedded into the beacon frame, the implementation of the SCCA compatible with the legacy IEEE 802.11 standard.

### BRIEF DESCRIPTION OF THE DRAWINGS

Figure 1 is a timing diagram of the SCCA according to the invention; and
Figure 2 is block diagram of a SCCA method according to the invention.

### DETAILED DESCRIPTION OF THE PREFERRED EMBODIMENTS

Our invention provides efficient channel access to stations that provide multimedia applications. The invention improves overall channel utilization. The invention can operate during a contention free period (CFP) as defined by the IEEE 802.11 standard. The invention exploits multi-rate physical-layer capability of the IEEE 802 11 standard.

Three specific goals for our invention are:
(1) Per-data stream-based QoS support - rather than per-class-based differentiated service as in the prior art. That is, each station is provided long-term QoS on a per-data stream basis, while accommodating short-term traffic variations;
(2) Efficient channel utilization via minimized channel wastage in the presence of bursty packet arrivals and reduced signaling overhead incurred by per-packet polling; and
(3) Intelligent policing to monitor and penalize stations that violate a pre-negotiated QoS contract.
   The SCCA method according to our invention operates during the contention free period and seeks to achieve highly efficient channel utilization, while providing each station data stream parameterized QoS. In contrast to prior art HCCA and dynamic TDMA schemes, where channel access is coordinated in a centralized fashion, our SCCA method provides fully distributed access for each station with the help of the AP.

Each data stream obtains a sequence index value (SIV), which indicates a channel access precedence among contending data streams, from the AP, and uses CSMA/CA to contend for channel access. The AP adjusts the SIV for each data stream according to an observed channel utilization and traffic pattern. The SIV values are assigned by a QoS-capable scheduler, e.g., weighted-round robin or weighted fair queuing algorithms.

The SIV enables each data stream to access the channel during the CFP in an assigned order without polling messages while still avoiding collisions. After gaining access to the channel, each data stream can transmit as long as the dynamic transmission duration period (TXDT).

The AP maintains a credit/debit counter for each data stream to record actual transmission time used by each data stream. The credit/debit value is used to adjust the SIV and TXDT of each data stream. The AP can also select an appropriate transmission rate to broadcast the SIV and TXDT only to stations that perceive good channel conditions, i.e., channels with a high SNR. This way, stations with bad channel conditions, i.e., low SNR, defer transmissions until channels conditions improve. At certain times, only stations at high transmission rates are eligible for channel access to maximize the overall system throughput.

In summary, SCCA seeks to provide each data stream long-term QoS contract in terms of bandwidth and maximum delay, while accommodating short-term traffic variations in terms of variable packet size and rate fluctuations. Without involving per-uplink-packet polling message, bandwidth wastage can be reduced greatly. Therefore, a higher effective throughput can be achieved. The dynamic TXDT and the credit/debit count accommodate flexibly traffic variations due to bursty packet arrival patterns. The SCCA method also leverages the multi-rate physical layer to further improve channel utilization.

### SCCA Protocol

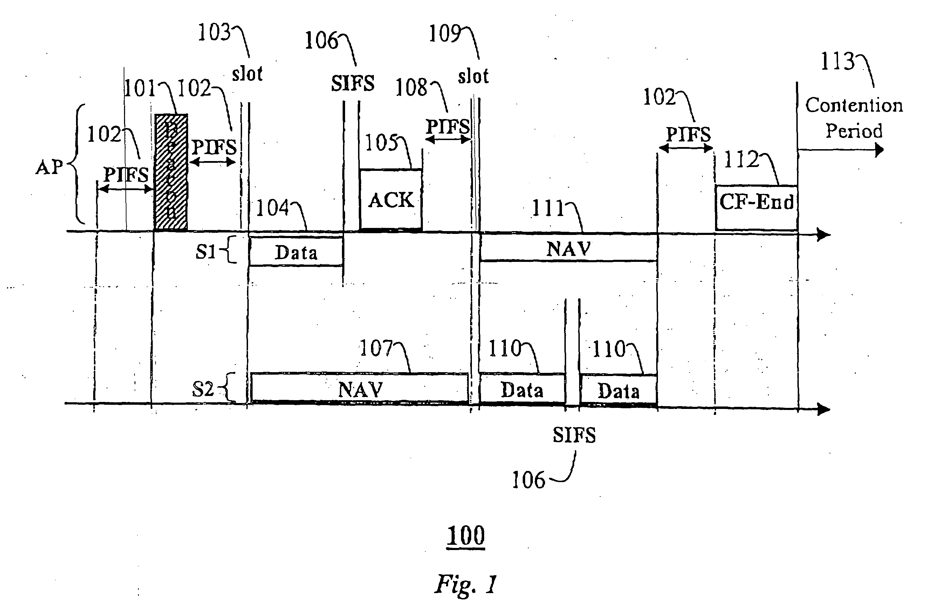

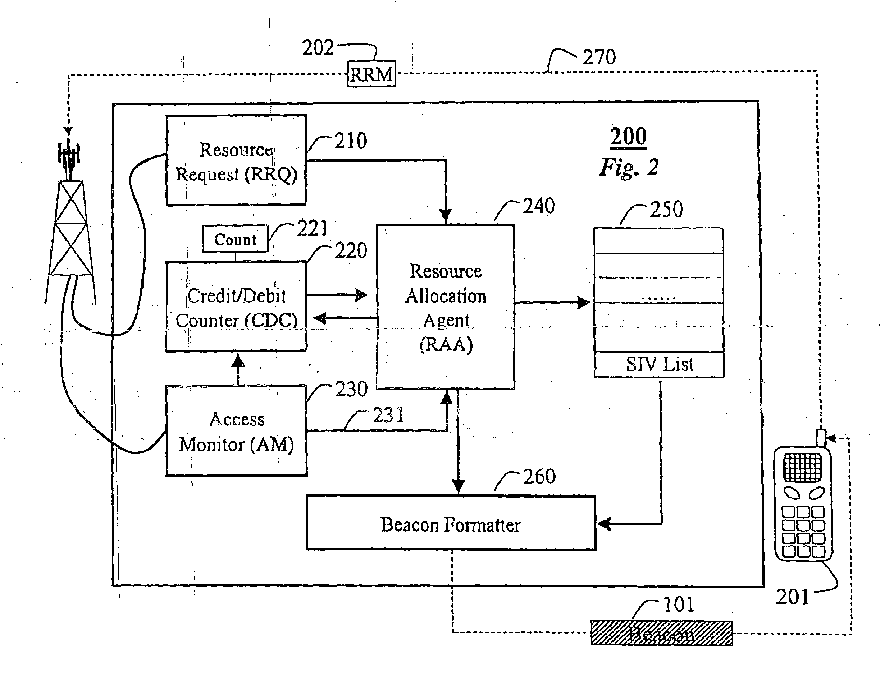

Figure 1 shows the SCCA protocol 100 according to the invention. Figure 2 shows components of the SCCA 200 in the AP. The protocol is initiated by a station 201 sending a resource reservation message (RRM) 202 to an access point (AP) in a contention period (CP).

In response to the resource reservation message, the station receives a non-zero sequence index value (SIV) and dynamic transmission duration period (TXDT) assigned to the station by the AP. For example, a SIV of 1 corresponds to the time associated with the first available slot in the CFP, and a SIV of 2 corresponds to the second slot, and so forth. The details of this operation are described in greater detail with reference to Figure 2.

The AP broadcasts the SIV and TXDT in a beacon message 101 via a physical channel 270. The beacon 101 is sent after the channel 270 has been idle longer than a point coordination inter frame space (PIFS) 102. Waiting guarantees a higher priority for channel access messages than other data messages. The SIV indicates a channel access precedence among contending data streams.

In the following discussion, we assume one station transmits one data stream at one time. However, our method also applies to stations transmitting multiple data streams concurrently.

Upon the reception of the beacon 101, each station sets a backoff counter to the SIV. Then, the station attempts to access the channel in a distributed CSMA/CA-like, yet collision-free manner as follows. The station repeatedly senses the channel and decrements the backoff counter if the channel is idle for every time slot 103. After the backoff counter reaches zero, the station begins transmission. If the channel is busy, then the station keeps the backoff counter constant until the channel is idle.

In the example protocol shown in Figure 1, a stream for a station S 1 and another stream for a station S2 have SIV values of I and 2, respectively. Hence, the station S I starts its transmission of data 104 one time slot after the PIFS idle period. After the station S 1 accesses the channel, the station S 1 can transmit continuously up to TXDT. An ACK 105 is sent by the AP, in response to receiving the data 104 correctly, after a short inter frame space 106.

The station S2 set its virtual carrier sense indicator, called a network allocation vector (NAV) 107 for a predetermined duration, and use this information together with a physical carrier sense when sensing the medium. This mechanism reduces the probability of a collision with a station that is 'hidden' from the station Station S2 does not decrement its backoff counter.

The station S2 resumes decrementing the backoff counter a PIFS period 108 after the channel is sensed idle again. Because the backoff counter is 1 at this time, the station S2 waits only for another time slot 109, before station S2 transmits its data 110. Note that station S 1 sets its NAV 111 while station S2 is transmitting.

After all the scheduled transmissions have been completed, or whenever the AP considers it necessary, the AP broadcasts a CF-End message 112 to terminate the contention free period and all the stations enter the next contention period 113.

The AP periodically adjusts the SIV for each station, based upon information such as observed channel usage, traffic pattern and new resource reservation requests. Various QoS-capable schedulers, e.g., weighted-round robin or weighted fair queuing processes, can be applied to assist computing the SIV.

The AP uses the credit/debit counter 220 for each data stream to record the actual transmission time used by each data stream. The credit/debit value is used to adjust the SIV and TXDT of the data stream. The SIV and TXDT are also transmitted at an appropriately high data rate to improve system throughput.

### System Structure

Figure 2 shows a system and method 200 for the SCCA inside the AP according to the invention. The SCCA includes a resource request (RRQ) block 210, a credit/debit counter (CDC) 220, and an access monitor (AM) 230 connected to a resource allocation agent (RAA) 240. The RAA is connected to a SIV list (SL) 250 and a beacon formatter 260. The beacon formatter 260 is connected to the physical channel 270 to broadcast periodically beacons 101.

### System Operation

The resource request block 210 receives and processes the resource reservation message 202 received from the station 201 associated with the AP. The message 210 is passed to the RAA 240.

The credit/debit counter 220 maintains a count 221 that reflects channel usage for each data stream that has an entry in the SIV list 250.

The access monitor monitors the channel 270 for channel access, and collects such statistics as the bandwidth usage of each data stream and the rate of the transmission. The AM 230 sends this information to the CDC 220. The AM also provides a rate threshold 231 to the RAA 240.

Based upon the input from RRQ, the CDC, and rate threshold, the RAA 240 assigns the SIVs and the TXDT to the data stream of station 201. The RAA also performs traffic monitoring. The RAA also maintains the SIV list 250.

The beacon formatter 260 embeds the SIV and TXDT in the beacon 101 for broadcast to all stations via the channel 270.

### Sequence Index Value (SIV)

According to the IEEE 802.11b/e standard, a polling technique is used to coordinate communications between stations and the AP during the CFP. A round-robin scheduler at the AP ensures each data stream a QoS according to a QoS contract and current data stream information. However, the polling incurs significant overhead.

In the SCCA according to the invention, we use the SIV to eliminate polling messages to dramatically increase the channel efficiency.

Unlike a prior art random access, SCCA predefines a channel access sequence for data streams. There are no channel collisions among these data streams, and the stations access the channel in the order of their SIV values. With the invention, the AP only performs the function of a central scheduler and distributes the SIV information in the beacons. Then, the data streams access the channel in a fully distributed manner without the interaction of the AP for each packet transmission.

Compared with the prior art dynamic TDMA based scheme, the SCCA enables stations to access the channel in a more flexible way via carrier sensing. There is no requirement for strict timing and pre-decided time slots. Moreover, when some stations do not have data to transmit in the pre-allocated slots, SCCA allows other stations to access the channel. In order to further reduce the signaling overhead due to ACK messages, SCCA can use a block ACK to acknowledge the correct reception of several packet transmissions.

### Dynamic Transmission Duration Period (TXDT)

To accommodate data stream variations, the SCCA also specifies a length of time duration that a given data stream can use continuously to transmit its packets. Therefore, the TXDT is used to regulate the channel access duration. The TXDT is also carried in the beacon

To accommodate variations in the data streams during different CFPs, we maintain the count 221 for each data stream to keep track of the actual time *T* used by each data stream during the CFPs. If the transmission time of a data stream is less than the TXDT assigned to that data stream, then the credit/debit counter 220 keeps the count constant. In the subsequent CFP, the credit or debit time is added or subtracted from the TXDT setting of that data stream. This way, we replace the fixed TXOP assignment for data streams with a dynamic adjustable TXDT. The scheme not only provides for long-term QoS contract, but also adapts to short-term, bursty traffic, particularly for variable bit rate data streams, and streams with variable sized packets.

Our SCCA method can also handle occasionally idle data streams. If all data streams from SIV *n* to SIV *m* , where *n* < *m*, are idle, then the next data stream with SIV *m* + 1 accesses the channel after at most (*m* - *n* + 1) time slots.

To handle persistently idle data streams, the AP uses the credit/debit count to track the status of the data stream. If a counter exceeds a predetermined threshold, the AP deletes the corresponding data stream from the SIV list 250. In contrast, a prior art HCCA according to the IEEE 802.1 le standard uses a period of full exchange of polling messages to detect an idle data stream.

### Access Monitoring and Data Streams Policing

The credit/debit count 221 of each data stream is also used police non-conforming data streams. If a data stream violates its QoS contract, then the actual transmission time will exceed its TXDT assignments. When this difference is greater than a specified threshold, the AP denies temporarily channel access for the data stream by broadcasting a new SIV for the errant station to compensate other data streams. In a worst case, the AP can de-associate the data stream by sending a de-association message to the station that generates a non-conforming stream.

### Multirate Support

The IEEE 802 11 standard specifies a multi-rate capability at the physical layer 270. Each station can select an appropriate transmission rate, which best matches a perceived SNR. If used properly, this feature can be exploited to greatly improve the overall channel efficiency.

In SCCA, we use two mechanisms to leverage this physical-layer feature. The goal is to ensure each data stream its long-term QoS, while improving system throughput.

In SCCA, the AP maintains a rate threshold value *R*ₜₕ. Stations that perceive good channel conditions, i.e., a relatively high SNR, can transmit at a rate higher than *R*ₜₕ. However, stations that transmit at a rate lower than *R*ₜₕ, due to bad channel conditions, are temporarily denied channel access. Therefore, the SCCA favors high-rate stations over low-rate high-rate stations for transmissions.

Because stations only access the channel when under the best channel conditions, the overall system throughput is greatly increased Moreover, the TXDT mechanism also provides the flexibility to accommodate short-term traffic variations and channel changes due to the multirate capability. The TXDT records the actual access time by each station and with the credit/debit mechanism provides long-term contracted time for QoS.

### Downlink Traffic Handling

For downlink data streams, the AP has priority over channel access by defemng only for a PIFS period before the AP accesses the channel. Therefore, the AP can send downlink data according to corresponding QoS contracts. Even during the contention free period, the AP can access the channel at any time because reserved data streams have to wait for a PIFS period plus their backoff timer value. Therefore, downlink data streams can readily provide QoS support.

### Backward Compatibility

The SCCA according to the invention is fully compatible with prior art random access as governed by DCF and EDCA mechanisms. The SCCA method also incorporates a controlled access period (CAP) in the CP to send polling messages to stations according to the IEEE 802.11e standard.

### Distribution of SIV and TXDT Information

In our SCCA, the SIV and TXDT is broadcast periodically in the beacons. Because the SIV only contains sequence numbers of data streams, a length of the SIV field depends on a maximum number of accepted data streams in the SIV list 250. Because multimedia applications may require different service times depending on their traffic patterns, specifying the duration of a transmission, the TXDT field, accommodates such heterogeneity.

### Effect of the Invention

The SCCA according to the invention operates during the CFP according to the IEEE 802.11 standard to support per-data stream QoS and improve effective channel throughput The SCCA regulates channel access by assigning channel access sequences and allowing short-term traffic variations of data stream. This combines the best features of polling-based and dynamic TDMA-based schemes. The SCCA works with variable packet sizes, transient idle data' streams, and non-compliant streams. The SCCA ensures that each stream receives its long-term bandwidth according to its QoS contract while accommodating short-term transient traffic variations. The SCCA also leverages the multi-rate capability at the IEEE 802.11 physical layer to further improve overall system throughput.

Performance analysis shows that the SCCA can achieve an overall throughput of more than 101Mbps, and throughput gain in the range of 56% to 83.3% over the prior art HCCA of the IEEE 802.11e standard, given a physical layer transmission rate of 216 Mbps.

Although the invention has been described by way of examples of preferred embodiments, it is to be understood that various other adaptations and modifications may be made within the spirit and scope or the invention. Therefore, it is the object of the appended claims to cover all such variations and modifications as come within the true spirit and scope of the invention.

## Claims

1. A method for accessing a channel in a network including a plurality of stations and an access point connected by a common wireless channel, comprising:
requesting access to a channel by a station to transmit a data stream to an access point;
assigning, in the access point, a sequence index value to the data stream;
broadcasting, from the access point, the sequence index value;
transmitting, from the station to the access point, the data stream during a contention free period at a time corresponding to the sequence index value received by the station.

2. The method of claim 1, further comprising:
assigning, in the access point, a dynamic transmission duration period to the data stream;
broadcasting, from the access point, the dynamic transmission duration period;
transmitting, from the station, the data stream for a continuous time corresponding to the dynamic transmission duration period.

3. The method of claim 1, in which the station requests access for transmitting a plurality of data streams, and a different sequence index value is assigned to each data stream to be transmitted by the station.

4. The method of claim 1, further composing:
adjusting periodically the sequence index value according to a channel utilization by the data stream; and
adjusting periodically the sequence index value according a condition of the channel between the station and the access point.

5. The method of claim 2, further comprising:
adjusting periodically the dynamic transmission duration period according to a channel utilization by the data stream;
adjusting periodically the dynamic transmission duration period according to a condition of the channel between the station and the access point

6. The method of claim 2, in which the sequence index value and the dynamic transmission duration period are included in a beacon broadcast periodically by the access point.

7. The method of claim 4, in which the adjusting is according to a quality-of-service contract associated with the data stream.

8. The method of claim, 2 in which a plurality of packets are transmitted during the dynamic transmission duration period; and further comprising:
acknowledging, by the access point, correct reception of the plurality of packets with a single acknowledgement packer.

9. The method of claim 1, further comprising:
assigning a data rate to the data stream according to a condition of the channel.

10. The method of claim 1, in which a plurality of stations concurrently request access to the channel, and each data stream to be transmitted by each station is assigned a different sequence index value.

11. The method of claim 1, further comprising:
gaining access to the channel at a time corresponding to the sequence index value using a collision sensitive random access scheme.

12. The method of claim 1, in which a plurality of stations request access to transmit a plurality of data streams, and in which a different sequence index value, each corresponding to an order for transmitting the plurality of data streams, is assigned to each of a plurality data streams.

13. A system for accessing a channel in a network including a plurality of stations and an access point connected by a common wireless channel, comprising:
means for requesting access to a channel by a station to transmit a data stream to an access point;
means for assigning, in the access point, a sequence index value to the data stream;
means for broadcasting, from the access point, the sequence index value;
means for transmitting, from the station to the access point, the data stream during a contention free period at a time corresponding to the sequence index value received by the station.
